(19) Europäisches Patentamt

European Patent Office

Office européen des brevets

(11) **EP 1 160 835 A1**

(12) **EUROPÄISCHE PATENTANMELDUNG**

(43) Veröffentlichungstag:
**05.12.2001  Patentblatt 2001/49**

(51) Int Cl.7: **H01J 61/46**, C09K 11/02

(21) Anmeldenummer: **01000194.9**

(22) Anmeldetag: **30.05.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **31.05.2000  DE 10026913**

(71) Anmelder:
- **Philips Corporate Intellectual Property GmbH
  52064 Aachen (DE)**
  Benannte Vertragsstaaten:
  **DE**
- **Koninklijke Philips Electronics N.V.
  5621 BA Eindhoven (NL)**
  Benannte Vertragsstaaten:
  **FR**

(72) Erfinder:
- **Feldmann, Dr. Claus
  52064, Aachen (DE)**
- **Jüstel, Dr. Thomas
  52064, Aachen (DE)**
- **Ronda, Dr. Cornelis
  52064, Aachen (DE)**
- **Jungk, Hans-Otto
  5264 Aachen (DE)**
- **Merikhi, Jacqueline
  52064, Aachen (DE)**

(74) Vertreter: **Volmer, Georg, Dipl.-Ing.
Philips Corporate Intellectual Property GmbH,
Habsburgerallee 11
52064 Aachen (DE)**

(54) **Gasentladungslampe mit Leuchtstoffschicht**

(57) Gasentladungslampe für dielektrisch behinderte Entladungen, die mit einem mit einer Gasfüllung gefüllten Entladungsgefäß, das mindestens eine Wandung, die aus einem dielektrischen Material besteht, und mindestens eine Wandung mit einer für sichtbare Strahlung mindestens teilweise transparenten Fläche mit einer Leuchtstoffschicht, die eine Leuchtstoffzubereitung aus einem Leuchtstoffpulver und einem Überzug, der eine Verbindung, ausgewählt aus der Gruppe der Fluoride und Orthophosphate der Elemente Magnesium, Calcium Barium, Aluminium, Scandium, Yttrium und Lanthan enthält, umfasst, mit einer Elektrodenstruktur für eine dielektrisch behinderte Entladung und mit Mitteln zur Zündung und Aufrechterhaltung der dielektrisch behinderten Entladung ausgerüstet ist.

**EP 1 160 835 A1**

**Beschreibung**

Die Erfindung betrifft eine Gasentladungslampe für dielektrisch behinderte Entladungen, die mit einem mit einer Gasfüllung gefüllten Entladungsgefäß, das mindestens eine Wandung, die aus einem dielektrischen Material besteht, und mindestens eine Wandung mit einer eine für sichtbare Strahlung zumindestens teilweise transparenten Fläche mit einer Leuchtstoffschicht umfasst, mit einer Elektrodenstruktur für eine dielektrisch behinderte Entladung und mit Mitteln zur Zündung und Aufrechterhaltung der dielektrisch behinderten Entladung ausgerüstet ist.

Gasentladungslampen für dielektrisch behinderte Entladungen werden insbesondere in Geräten für die Büroautomation, z.B. Farbkopierern und Farbscannern, für die Signalbeleuchtung, z. B. als Brems- und Richtungsanzeigelicht in Automobilen, für Hilfsbeleuchtungen, z. B. der Innenbeleuchtung von Automobilen sowie insbesondere auch für die Hintergrundbeleuchtung von Anzeigen und Bildschirmen, z. B. von Flüssigkristallanzeigen, eingesetzt.

Für die genannten Anwendungen ist nicht nur eine über die Länge der Lampe gleichmäßige, sondern auch eine hohe Leuchtdichte notwendig Um die Leuchtdichte zu steigern, muß mehr Leistung in das System eingekoppelt werden. Das belastet aber u.a. auch die Leuchtstoffe in der Leuchtstoffschicht stärker. Mit zunehmender Leistungseinkopplung degradieren die Leuchtstoffe schneller und die Lichtausbeute nimmt während des Betriebes schneller ab.

Aus DE 197 27 607 A1 ist bereits ein lumineszierender Schirm, insbesondere ein Plasmabildschirm, mit einer Leuchtstoffzubereitung aus einem Aluminat-Leuchtstoff mit einer Beschichtung, die ein oder mehrere catena-Polyphosphate von Metallen der Gruppe der Erdalkalimetalle, Zink, Cadmium oder Mangan enthält, die den Leuchtstoff gegen Degradation schützen.

Es ist eine Aufgabe der Erfindung, eine Gasentladungslampe für dielektrisch behinderte Entladungen zur Verfügung zu stellen, die dauerhaft und zuverlässig mit hoher Leistung betrieben werden kann.

Erfindungsgemäß wird die Aufgabe gelöst durch eine Gasentladungslampe für dielektrisch behinderte Entladungen, die mit einem mit einer Gasfüllung gefüllten Entladungsgefäß, das mindestens eine Wandung, die aus einem dielektrischen Material besteht, und mindestens eine Wandung mit einer für sichtbare Strahlung mindestens teilweise transparenten Fläche mit einer Leuchtstoffschicht, die eine Leuchtstoffzubereitung aus einem Leuchtstoffpulver und einem Überzug, der eine Verbindung, ausgewählt aus der Gruppe der Fluoride und Orthophosphate der Elemente Magnesium, Caldum Barium, Aluminium, Scandium, Yttrium und Lanthan enthält, umfasst, mit einer Elektrodenstruktur für eine dielektrisch behinderte Entladung und mit Mitteln zur Zündung und Aufrechterhaltung der dielektrisch behinderten Entladung ausgerüstet ist.

In einer derartigen Gasentladungslampe für dielektrisch behinderte Entladungen ist die Degradation des Leuchtstoffs unter Einfluss einer VUV- oder UV-C-Strahlung vermindert bzw. vollständig unterdrückt.

Die Fluoride und Orthophosphate der oben genannten Art bilden einen harten, wasserunlöslichen Überzug auf den Leuchtstoffpartikeln, sie reagieren nicht mit den Leuchtstoffen und sie werden selbst durch Strahlung nicht degradiert. Da sie farblos sind, beeinflussen sie auch nicht die Farbwerte der Leuchtstoffe. Sie sind hydrophil, so dass sich die beschichteten Leuchtstoffpartikel leicht dispergieren lassen.

Es wurde weiterhin gefunden, dass die Gasentladung besonders gut an der mit der Leuchtstoffschicht bedeckten Wandung ankoppelt

Im Rahmen der vorliegenden Erfindung ist es bevorzugt, dass der Überzug in einer Menge von 0.1 bis 10 Gew.-% bezogen auf den Leuchtstoff vorhanden ist.

E ist besonders bevorzugt, dass der Leuchtstoff $BaMgAl_{10}O_{17}$:Eu ist.

Besonders vorteilhafte Wirkungen gegenüber dem Stand der Technik werden erhalten, wenn der Leuchtstoff $BaMgAl_{10}O_{17}$:Eu ist und der Überzug eine Verbindung, ausgewählt aus der Gruppe der Fluoride und Orthophosphate der Elemente Magnesium, Barium und Aluminium enthält. Der Überzug bedeckt die Oberfläche des $BaMgAl_{10}O_{17}$:Eu- Pulvers vollständig und homogen und die Haftung des Überzuges ist hervorragend.

Nachfolgend wird die Erfindung anhand von zwei Ausführungsbeispielen weiter erläutert.

Eine Gasentladungslampe für dielektrisch behinderte Entladungen nach der Erfindung umfasst ein Entladungsgefäß mit einer Gasfüllung mit mindestens einer Wandung, die aus einem dielektrischen Material besteht und mit mindestens einer Wandung, die eine für sichtbare Strahlung mindestens teilweise transparente Fläche mit einer Leuchtstoffschicht aufweist. Die Leuchtstoffschicht enthält eine Leuchtstoffzubereitung aus einem Leuchtstoffpulver mit einem Überzug, der eine Verbindung, ausgewählt aus der Gruppe der Fluoride und Orthophosphate der Elemente Magnesium, Calcium Barium, Aluminium, Scandium, Yttrium und Lanthan enthält. Außerdem ist die Gasentladungslampe mit einer Elektrodenstruktur für eine dielektrisch behinderte Entladung und mit Mitteln zur Zündung und Aufrechterhaltung der dielekrisch behinderten Entladung ausgerüstet.

In einer typische Bauform für die Gasentladungslampe besteht diese aus einem zylindrischen, mit Xenon gefüllten Lampenkolben aus Glas, auf dessen Wandung außen ein Paar streifenförmiger Elektroden elektrisch isoliert voneinander angeordnet ist. Die streifenförmigen Elektroden erstrecken sich über die gesamte Länge des Lampenkolbens, wobei sie sich mit ihren Längsseiten unter Freilassung von zwei Spalten gsgenüberliegen. Die Elektroden sind an die Pole einer Hochspannungsquelle angeschlossen, die mit einer Wechselspannung in der Größenordnung von 20 kHz bis 500 kHz derart betrieben wird, dass sich eine elektrische Entladung nur im Bereich der inneren Oberfläche des Lampenkolbens bildet.

Wenn eine Wechselstromspannung an die Elektroden angelegt wird, kann in dem xenonhaltigen Füllgas eine stille elektrische Ladung gezündet werden. Dadurch bilden sich im Xenon Excimere, d. h. Moleküle, die aus einem angeregten Xenon-Atom und einem Xenon-Atom im Grundzustand bestehen.

$$Xe+X* = Xe_2*$$

Die Anregungsenergie wird als UV-Strahlung mit einer Wellenlänge von $\lambda$ = 170 bis 190 nm wieder abgegeben. Diese Umwandlung von Elektronenenergie in UV-Strahlung erfolgt sehr effizient. Die erzeugten UV-Photonen werden von den Leuchtstoffen der Leuchtstoffschicht absorbiert und die Anregungsenergie wird in dem längerwelligen Bereich des Spektrums teilweise wieder abgegeben.

Grundsätzlich sind für das Entladungsgefäß eine Vielzahl von Bauformen wie Platten, einfache Rohre, Koaxialrohre, gerade, u-förmig, kreisförmig gebogene oder gewendelte, zylinderförmige oder anders geformte Entladungsröhren möglich.

Als Material für das Entladungsgefäßes werden Quarz oder Glassorten verwendet, die für VUV- und UV-C-Strahlung durchlässig sind

Die Elektroden bestehen aus einem Metall, z. B. Aluminium oder Silber, einer Metalllegierung oder aus einer transparenten leitfähigen anorganischen Verbindung z. B. ITO. Sie können als Beschichtung, als aufgeklebte Folie, als Draht oder als Drahtnetz ausgebildet sein.

Um die Lichtstärke in eine bestimmte Richtung zu bündeln, kann ein Teil des Entladungsgefäßes mit einer Beschichtung versehen werden, die als Reflektor für VUV -und UV-C-Licht wirkt.

Das Entladungsgefäß ist mit einem Gasgemisch, das ein Edelgas wie Xenon, Krypton, Neon oder Helium enthält, gefüllt. Gasfüllungen, die überwiegend aus sauerstofffreiem Xenon bestehen, sind bevorzugt. Die Innenwandung des Gasentladungsgefäßes ist teilweise oder ganz mit einer Leuchtstoffschicht, die ein oder auch mehrere Leuchtstoffe bzw. Leuchtstoffzubereitungen enthält, beschichtet. Weiterhin kann die Leuchtstoffschicht noch organisches oder anorganisches Bindemittel oder eine Bindemittelzusammensetzung enthalten.
Der Leuchtstoff ist bevorzugt ein VUV-Leuchtstoff und besteht im allgemeinen aus einem Wirtsgitter aus einem anorganischen sauerstoffhaltigem Material wie Oxide, Aluminate, Phosphate, Borate oder Silikate, das mit einigen Prozent eines Aktivators dotiert ist.
Die Aluminat-Leuchtstoffe, die gemäß der Erfindung mit einem stabilisierenden Überzug versehen werden, sind in erster Linie die Leuchtstoffe auf der Basis von

$MeMgAl_{10}O_{17}$ mit Me = Ba, Sr, Eu mit der $\beta$ - alumina - Kristallstruktur, z.B. $BaAl_{10}O_{17}$:Eu (BAM), Ba$(MgAl)_{10}O_{17}$:Mn und $BaAl_{12}O_{19}$:Mn, sowie die Leuchtstoffe mit verwandter Kristallstruktur wie $BaMgAl_{16}O_{27}$: Eu und $BaMgAl_{14}O_{23}$:Eu. Weiterhin können Aluminat-Leuchtstoffe mit Magnetoplumbit-Struktur $MeAl_{12}O_{19}$ mit Me = Ca, Sr, Eu, bspw. $Ba(Mg,Al)_{11}O_{19}$:Eu, verwendet werden. Diese Aluminat-Leuchtstoffe sind besonders effiziente Leuchtstoffe unter UV- bzw. Vakuum-UV-Anregung.
Besonders bevorzugte Leuchtstoffe sind weiterhin das rot lumineszierende $(Y,Gd)BO_3$:Eu, das grün lumineszierende $ZnSiO_4$:Mn und das blau lumineszierende $BaMgAl_{10}O_{17}$:Eu.

Der Absorptionskoeffizient der genannten Leuchtstoffe ist für die Wellenlängen im Bereich der Xenonstrahlung besonders groß und die Quantenausbeute hoch. Das Wirtsgitter beteiligt sich nicht an dem Lumineszenzprozeß, es beeinflußt aber die genaue Lage der Energieniveaus des Aktivatorions, und infolgedessen die Wellenlängen von Absorption und Emission.

Die Korngröße der Leuchtstoffpartikel ist nicht kritisch. Üblicherweise werden die Leuchtstoffe als feinkörnige Pulver mit einer Korngrößenverteilung zwischen 1 und 20 $\mu$m verwendet.

Diese Leuchtstoffpulver werden mit einer dünnen und gleichmäßigen Schicht aus einer oder mehreren Verbindungen, die ausgewählt ist aus der Gruppe der Fluoride und
Orthophosphate der Elemente Magnesium, Calcium, Barium, Aluminium, Scandium, Yttrium und Lanthan beschichtet.

Die Schichtdicke beträgt üblicherweise 0.001 bis 0.2 $\mu$m und ist damit so dünn, dass die UV-Strahlung ohne wesentlichen Energieverlust eindringen kann. Insbesondere $MgF_2$ zeichnet sich auch durch einen niedrigen Brechungsindex n= 1.3 aus.
Die Überzüge aus diesen Materialien auf den Leuchtstoffpartikeln können z. B durch Abscheidung aus der Gasphase oder durch ein Nassbeschichtungsverfahren aufgebracht werden.

Bevorzugtes Nassbeschichtungsverfahren für die Leuchtstoffpartikel ist Präzipitation. Die Präzipitation basiert auf einer kontrollierten, langsamen Reaktion von wasserlöslichen Fluoriden oder Orthophosphate mit wasserlöslichen Verbindungen des Magnesiums, Calciums, Bariums, Aluminiums, Scandiums, Yttriums oder Lanthans in Gegenwart des Leuchtstoffpulvers. Die Konzentration dieser Verbindungen in der Reaktionslösung wird langsam erhöht, bis sie den Fällungspunkt erreicht. Bei weiterer Erhöhung der Konzentration schlagen sich die Fluoride und Orthophosphate der Elemente Magnesium, Calcium Barium, Aluminium, Scandium, Yttrium und Lanthan auf den Leuchtstoffpartikel, die als Kristallisationskeime wirken, nieder.

Wasserlösliche Ausgangsverbindungen des Magnesiums, Calciums, Bariums, Aluminiums, Scandiums, Yttriums und Lanthans sind die Carbonate oder Nitrate. Als wasserlösliche Orthophosphate und Fluoride kommen insbesondere die Natriumverbindungen in Betracht

Zur Herstellung der Reaktionslösung werden ein oder mehrere wasserlösliche Orthophosphate oder Fluoride einzeln oder gemeinsam in Wasser gelöst. Die Konzentration des Orthophosphates oder Fluoride in der wässerigen Lösung kann je nach Kation 0,5 bis 10 Gew.-% betragen.

Üblicherweise wird als Lösungsmittel Wasser verwendet. Ein Anteil von 20 bis 90 Gew.-% eines organischen Lösungsmittels wie Ethanol, Methanol, Aceton usw. fordert zwar besondere Vorsichtsmaßnahmen, verbessert aber die Abscheidung der Orthophosphate und Fluoride.

In diese Lösung wird der zu beschichtende Leuchtstoff 10 bis 30 min dispergiert.

Weiterhin wird eine Lösung eines wasserlöslichen Magnesium-, Calcium-, Strontium-, Barium,- Aluminium-, Scandium-, Yttrium- oder Lanthansalzes in Wasser in einer Konzentration von 1 bis 15 Gew.-% hergestellt.

Unter ständiger Kontrolle des pH-Wertes wird diese Lösung zu der Leuchtstoffsuspension hinzugefügt. Der pH-Wert muß im neutralen bis basischen Bereich, bevorzugt bei einem pH-Wert zwischen 9,5 und 11,5 bleiben, wozu nötigenfalls Natronlauge oder Ammoniak zudosiert wird. Diese Suspension wird noch 1-5 h weiter gerührt, um den Überzug irreversibel zu altern.

Danach wird die Leuchtstoffzubereitung von der überschüssigen Beschichtungslösung abgetrennt, mit einer Waschflüssigkeit, z.B. Alkohol/Wasser, gewaschen und bei 100-150°C getrocknet. Durch dieses Verfahren wind ein mechanisch und chemisch sehr beständige Überzug erhalten, der fest an dem Substrat haftet.

Durch ESCA- Messungen läßt sich feststellen, daß der Überzug die Leuchtstoffpartikel vollkommen abdeckt, obwohl es für die Erfindung nicht wesentlich ist, dass der Überzug die Leuchtstoffpartikel absolut dicht umschließt.

Der Überzug ist hydrophil und ist gut kompatibel mit den üblichen Beschichtungen, so daß es als Grundschicht für weitere Beschichtungen geeignet ist, die anschließend noch aufgebracht werden können, um die Pulvereigenschaften oder die Farbwerte des Leuchtstoffes zu verbessern.

Der Überzug selber zeigt keine Degradation. Insgesamt wird die Lebensdauer des Leuchtstoffes durch den Überzug, wie sich durch ALT-Tests zeigen läßt, um den Faktor 5-10 gesteigert.

Als Herstellungsverfahren für Leuchtstoffschicht auf einer Wandung des Entladungsgefäßes kommen ebenfalls sowohl Trockenbeschichtungsverfahren, wie z. B. elektrostatische Abscheidung oder elektrostatisch unterstütztes Bestäuben, als auch ein Nassbeschichtungsverfahren wie z. B. Tauchen oder Sprühen in Betracht.

Für Nassbeschichtungsverfahren muss die Leuchtstoffzubereitung in Wasser, einem organischen Lösemittel, gegebenenfalls zusammen mit einem Dispergiermittel, einem Tensid und einem Antischaummittel, oder einer Bindemittelzubereitung dispergiert werden. Geeignet für Bindemittelzubereitungen für eine Gasentladungslampe nach der Erfindung sind organische oder anorganische Bindemittel, die einer Betriebstemperatur von 250°C ohne Zersetzung, Versprödung oder Verfärbung überstehen.

Beispielsweise kann die Leuchtstoffzubereitung auf eine Wandung des Entladungsgefäßes mittels eines Flow-coating-Verfahrens aufgebracht werden. Die Beschichtungssuspensionen für das Flow-coating-Verfahren enthalten Wasser oder eine organischen Verbindung wie Butylacetat als Lösungsmittel. Die Suspension wird durch Zugabe von Hilfsmitteln, wie Stabilisatoren, Verflüssigern Cellulosederivaten, stabilisiert und in ihren rheologischen Eigenschaften beeinflußt. Die Leuchtstoffsuspension wird als dünne Schicht auf die Gefäßwände aufgebracht, getrocknet und bei 600°C eingebrannt.

Es kann auch bevorzugt sein, dass die Leuchtstoffzubereitung für die Leuchtstoffschicht elektrostatisch auf der Innenseite des Entladungsgefäßes abgeschieden wird.

Die Leuchtstoffschicht hat üblicherweise eine Schichtdicke von 5 bis 100 µm.

Das Gefäß wird dann evakuiert, um alle gasförmigen Verunreinigungen, insbesondere Sauerstoff zu entfernen. Anschließend wird das Gefäß mit Xenon gefüllt und verschlossen.

Ausführungsbeispiel 1

100 g $BaMgAl_{10}O_{17}$:Eu werden in 1l Wasser suspendiert und 8h naß gemahlen, um die Leuchtstoffpartikel zu desagglomerieren. Zu der desagglomerierten Leuchtstoffsuspension werden unter stetigem Rühren tropfenweise 21 g $Mg(NO_3)_2$ x 6 $H_2O$, gelöst in 200 ml Wasser, zugegeben. Der pH-Wert der Suspension wird dabei in einem Bereich von 6.5 bis 7.5 gehalten. Nach dem Zutropfen der NaF-Lösung läßt man eine Stunde weiter rühren und erhöht den pH-Wert auf 8.5. Man läßt weitere 30 min rühren, filtriert den beschichteten Leuchtstoff ab und wäscht ihn mehrfach mit aq. dest. Anschließend wird der beschichtete Leuchtstoff 4h bei 120°C getrocknet. Man erhält ein mit 5 Gew.-% $MgF_2$ beschichtetes $BaMgAl_{10}O_{17}$:Eu.

Ausführungsbeispiel 2

100 g $BaMgAl_{10}O_{17}$:Eu werden in 1l Wasser suspendiert und 8h naß gemahlen, um die Leuchtstoffpartikel zu desagglomerieren. Zu der desagglomerierten Leuchtstoffsuspension werden unter stetigem Rühren tropfenweise 10 g $Na_3PO_4$ x 12 $H_2O$, gelöst in 200 ml Wasser, zugegeben. Der pH-Wert der Suspension wird dabei in einem Bereich von 8.0 bis 9.0 gehalten.

Nach dem Zutropfen der Natriumphosphat-Lösung läßt man eine Stunde weiter rühren und erhöht den pH-Wert auf 9.5. Man läßt weitere 30 min rühren, filtriert den beschichteten Leuchtstoff ab und wäscht ihn mehrfach mit aq. dest. Anschließend wird der beschichtete Leuchtstoff 4h bei 120°C, dann weitere 2h in $N_2$-Atmosphäre bei 500°C getrocknet. Man erhält ein mit 5 Gew.-% $Ba_3(PO_4)_2$ beschichtetes $BaMgAl_{10}O_{17}$:Eu.

**Patentansprüche**

1. Gasentladungslampe für dielekrisch behinderte Entladungen, die mit einem mit einer Gasfüllung gefüllten Entladungsgefäß, das mindestens eine Wandung, die aus einem dielektrischen Material besteht, und mindestens eine Wandung mit einer für sichtbare Strahlung mindestens teilweise transparenten Fläche mit einer Leuchtstoffschicht, die eine Leuchtstoffzubereitung aus einem Leuchtstoffpulver und einem Überzug, der eine Verbindung, ausgewählt aus der Gruppe der Fluoride und Orthophosphate der Elemente Magnesium, Calcium Barium, Aluminium, Scandium, Yttrium und Lanthan enthält, umfasst, mit einer Elektrodenstruktur für eine dielektrisch behinderte Entladung und mit Mitteln zur Zündung und Aufrechterhaltung der dielektrisch behinderten Entladung ausgerüstet ist.

2. Gasentladungslampe gemäß Anspruch 1,
   **dadurch gekennzeichnet,**
   **dass** der Überzug in einer Menge von 0.1 bis 10 Gew.-% bezogen auf den Leuchtstoff vorhanden ist.

3. Gasentladungslampe gemäß Anspruch 1,
   **dadurch gekennzeichnet,**
   **dass** der Leuchtstoff $BaMgAl_{10}O_{17}$:Eu ist.

4. Gasentladungslampe gemäß Anspruch 1,
   **dadurch gekennzeichnet,**
   **dass** der Leuchtstoff $BaMgAl_{10}O_{17}$:Eu ist und der Überzug eine Verbindung, ausgewählt aus der Gruppe der Fluoride und Orthophosphate der Elemente Magnesium, Barium und Aluminium enthält.

**Europäisches Patentamt**

# EUROPÄISCHER RECHERCHENBERICHT

Nummer der Anmeldung

EP 01 00 0194

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| P,X | WO 00 58998 A (PHILIPS CORP INTELLECTUAL PTY; KONINKL PHILIPS ELECTRONICS NV (NL)) 5. Oktober 2000 (2000-10-05) * Spalte 4, Zeile 18 - Zeile 30 * | 1 | H01J61/46 C09K11/02 |
| X | US 5 714 835 A (MULLER ULRICH ET AL) 3. Februar 1998 (1998-02-03) | 1-4 | |
| Y | * Spalte 5, Zeile 18 - Zeile 23 * * Spalte 7, Zeile 31 - Zeile 38 * | 1-4 | |
| Y | NICHIA KAGAKU KOGYO KK: "WPI WORLD PATENT INFORMATION DERWENT, DERWENT, GB" , WPI WORLD PATENT INFORMATION DERWENT, DERWENT, GB, VOL. 1997, NR. 7 XP002150607 * Zusammenfassung * & JP 08 319483 A 3. Dezember 1996 (1996-12-03) * Beispiel 7; Tabelle 1 * | 1-4 | |
| Y | US 5 910 333 A (LIN CHIE-CHING ET AL) 8. Juni 1999 (1999-06-08) * Spalte 1, Zeile 23 - Zeile 32 * * Spalte 4, Zeile 19 - Zeile 31 * | 1-4 | RECHERCHIERTE SACHGEBIETE (Int.Cl.7) H01J C09K |
| Y | US 4 048 533 A (HINSON DAVID C ET AL) 13. September 1977 (1977-09-13) * Spalte 10, Zeile 3 - Zeile 22 * | 1-4 | |
| X | US 4 983 881 A (ELIASSON BALDUR ET AL) 8. Januar 1991 (1991-01-08) * Spalte 4, Zeile 31 - Zeile 43 * | 1 | |
| A | DE 42 35 743 A (HERAEUS NOBLELIGHT GMBH) 28. April 1994 (1994-04-28) * Seite 3, Zeile 1 - Zeile 7 * | 1 | |

-/--

Der vorliegende Recherchenbericht wurde für alle Patentansprüche erstellt

| Recherchenort | Abschlußdatum der Recherche | Prüfer |
|---|---|---|
| MÜNCHEN | 18. September 2001 | Zuccatti, S |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : In der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**Europäisches**
**Patentamt**

**EUROPÄISCHER RECHERCHENBERICHT**

Nummer der Anmeldung

EP 01 00 0194

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | US 5 268 614 A (LABIB MOHAMED E  ET AL) 7. Dezember 1993 (1993-12-07) * Anspruch 1 * ---- | 1 | |
| A | US 5 695 685 A (CHAU CHUNG NIN) 9. Dezember 1997 (1997-12-09) * Tabelle 5 * ---- | 1-4 | |
| D,A | US 5 998 047 A (CZARNOJAN WOLFRAM  ET AL) 7. Dezember 1999 (1999-12-07) * das ganze Dokument * ------ | 1-4 | |

RECHERCHIERTE SACHGEBIETE (Int.Cl.7)

Der vorliegende Recherchenbericht wurde für alle Patentansprüche erstellt

| Recherchenort | Abschlußdatum der Recherche | Prüfer |
|---|---|---|
| MÜNCHEN | 18. September 2001 | Zuccatti, S |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

                                                          
& : Mitglied der gleichen Patentfamilie, übereinstimmendes
    Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 01 00 0194

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

18-09-2001

| Im Recherchenbericht angeführtes Patentdokument | | Datum der Veröffentlichung | Mitglied(er) der Patentfamilie | | Datum der Veröffentlichung |
|---|---|---|---|---|---|
| WO 0058998 | A | 05-10-2000 | CN | 1310857 T | 29-08-2001 |
| | | | EP | 1082752 A | 14-03-2001 |
| US 5714835 | A | 03-02-1998 | DE | 4311197 A | 06-10-1994 |
| | | | CA | 2155340 A | 13-10-1994 |
| | | | CA | 2159906 A | 13-10-1994 |
| | | | CN | 1120873 A,B | 17-04-1996 |
| | | | CZ | 9502421 A | 17-07-1996 |
| | | | WO | 9423442 A | 13-10-1994 |
| | | | WO | 9422975 A | 13-10-1994 |
| | | | DE | 59405921 D | 10-06-1998 |
| | | | EP | 1078972 A | 28-02-2001 |
| | | | EP | 1076084 A | 14-02-2001 |
| | | | EP | 0733266 A | 25-09-1996 |
| | | | EP | 0738311 A | 23-10-1996 |
| | | | HK | 1008759 A | 14-05-1999 |
| | | | HU | 71766 A,B | 29-01-1996 |
| | | | JP | 8508363 T | 03-09-1996 |
| | | | JP | 8508307 T | 03-09-1996 |
| | | | US | 5604410 A | 18-02-1997 |
| US 5910333 | A | 08-06-1999 | US | 5792509 A | 11-08-1998 |
| US 4048533 | A | 13-09-1977 | KEINE | | |
| US 4983881 | A | 08-01-1991 | CH | 675504 A | 28-09-1990 |
| | | | CA | 1310686 A | 24-11-1992 |
| | | | DE | 3855074 D | 11-04-1996 |
| | | | EP | 0324953 A | 26-07-1989 |
| | | | JP | 2007353 A | 11-01-1990 |
| | | | JP | 2057211 C | 23-05-1996 |
| | | | JP | 7087093 B | 20-09-1995 |
| DE 4235743 | A | 28-04-1994 | KEINE | | |
| US 5268614 | A | 07-12-1993 | US | 5391959 A | 21-02-1995 |
| US 5695685 | A | 09-12-1997 | EP | 0852254 A | 08-07-1998 |
| | | | JP | 10195427 A | 28-07-1998 |
| US 5998047 | A | 07-12-1999 | DE | 19727607 A | 07-01-1999 |
| | | | EP | 0887397 A | 30-12-1998 |
| | | | JP | 11073887 A | 16-03-1999 |

EPO FORM P0461

Für nähere Einzelheiten zu diesem Anhang : siehe Amtsblatt des Europäischen Patentamts, Nr. 12/82